# FASCICULE DE BREVET EUROPEEN

(11) **EP 4 111 040 B1**
(45) Date de publication et mention de la délivrance du brevet: **28.02.2024**
(21) Numéro de dépôt: 21705583.9
(22) Date de dépôt: 11.01.2021
(51) Int. Cl.: F01N 3/20, F01N 9/00, F01N 3/021, F01N 3/023, F01N 3/10, F01N 13/00

(54) **PROCEDE DE DIAGNOSTIC D'UN CATALYSEUR ET DISPOSITIF DE DIAGNOSTIC APTE A METTRE EN OEUVRE LEDIT PROCEDE**
KATALYSATORKONVERTERDIAGNOSEVERFAHREN UND DIAGNOSEVORRICHTUNG ZUR DURCHFÜHRUNG DIESES VERFAHRENS
CATALYTIC CONVERTER DIAGNOSTICS METHOD AND DIAGNOSTICS DEVICE ABLE TO IMPLEMENT SAID METHOD

(30) Priorité: 26.02.2020 FR 2001909
(43) Date de publication de la demande: 04.01.2023
(73) Titulaire: Stellantis Auto SAS, 78300 Poissy (FR)
(72) Inventeur: LEMAITRE, Charles, 27730 Epieds (FR); BARATTE, Jean, 75008 Paris (FR)
(86) Numéro de dépôt international: PCT/FR2021/050033
(87) Numéro de publication internationale: WO 2021/170919

(56) Documents cités:
- GB-A- 2 536 951
- US-A1- 2013 227 935
- US-A1- 2016 222 861

## Description

L'invention se rapporte à un procédé de diagnostic d'un catalyseur agencé dans une ligne d'échappement d'un moteur à combustion interne du type Diesel. L'invention concerne également un dispositif de diagnostic d'un catalyseur apte à mettre en oeuvre le procédé selon l'invention.

Il est connu de l'art antérieur de traiter les polluants provenant des gaz d'échappement d'un moteur à combustion interne du type Diesel au moyen d'un catalyseur, connu également sous l'acronyme DOC, signifiant Diesel Oxydation Catalyst. Ce catalyseur permet de traiter le monoxyde de carbone et les hydrocarbures imbrûlés afin de les convertir en dioxyde de carbone et en eau. En revanche, ce catalyseur ne permet ni de traiter les oxydes d'azote ni de réduire la quantité de particules émises par le moteur. Il est alors mis en oeuvre un système de traitement des oxydes d'azote en aval du catalyseur désigné par système SCR, acronyme signifiant Selective Catalytic Réduction en anglais, ou système de réduction catalytique sélective RCS, en français. Concernant le traitement des particules, il est intégré à la ligne d'échappement du moteur à combustion interne un filtre à particules. Il est régulièrement nécessaire de régénérer ce filtre à particules car au fur et à mesure des kilomètres parcourus par le véhicule automobile animé par le moteur, le filtre à particules accumule des particules, dénommées également suies, qui ont tendance à créer une perte de charge et ainsi à diminuer l'efficacité du moteur. On réalise alors des injections de carburant tardives, appelées également post-injections, à intervalles réguliers, par exemple tous les 500 à 1000 km parcourus. On envoie une quantité de gazole imbrûlé importante dans le catalyseur dans lequel il va s'enflammer de manière à élever la température des gaz d'échappement jusqu'à atteindre une température comprise entre 450 °C et 550 °C. Quant au système SCR, il est nécessaire d'effectuer de multiples post-injections de carburant afin de maintenir une température comprise entre 200 °C et 300 °C dans la ligne d'échappement et ainsi assurer son bon fonctionnement. On connaît de l'état de la technique le document US 5,860,227 A qui divulgue un procédé consistant à surveiller l'aptitude au fonctionnement d'un catalyseur installé dans la zone des gaz d'échappement d'un moteur à combustion interne. La surveillance concerne l'élévation de température produite lors d'une réaction exotherme faisant intervenir les composants réducteurs contenus dans les gaz d'échappement. L'augmentation de température est déterminée à l'aide de deux signaux de température, le premier signal de température étant produit sur la base d'une mesure en aval du catalyseur et le second signal de température étant formé à l'aide d'un modèle de température. Le modèle de température peut former la température en aval d'un catalyseur complètement inopérant, d'un catalyseur qui est encore juste suffisamment opérationnel ou d'un catalyseur qui est entièrement opérationnel.

En outre, on connaît de l'art antérieur le document FR 2 885 387 A qui divulgue un procédé de diagnostic d'un dispositif de traitement des gaz d'échappement installé dans la zone des gaz d'échappement d'un moteur à combustion interne. Il est proposé de déterminer une mesure de température des gaz d'échappement en amont du dispositif de traitement des gaz d'échappement et une mesure de la température dans le dispositif de traitement des gaz d'échappement, on effectue un diagnostic seulement si la mesure de température des gaz d'échappement en amont du dispositif de traitement des gaz d'échappement dépasse une limite inférieure donnée par le début de la conversion catalytique d'un agent réactif sur la couche catalytique et si la mesure de température des gaz d'échappement en amont du dispositif de traitement des gaz d'échappement est inférieure à une limite supérieure inférieure à la température d'allumage des particules accumulées. A l'aide d'un modèle de la réaction catalytique, il est évalué une mesure de la température dans le dispositif de traitement des gaz d'échappement et à partir du signal évalué et du signal mesuré, il est déterminé au moins une grandeur de diagnostic que l'on compare à une valeur de seuil et on émet un signal de défaut si la grandeur de diagnostic dépasse la valeur de seuil.

Lorsqu'il est produit de multiples post-injections pour assurer le bon fonctionnent du système SCR et que l'un des procédés décrits dans l'art antérieur est mis en oeuvre pour diagnostiquer le catalyseur, il apparaît un signalement de défaut du catalyseur. En effet, il est détecté de multiples post-injections considérées comme suffisantes pour générer un exotherme, mais ce dernier étant faible, le résultat du diagnostic est un défaut du catalyseur. Ainsi, il apparaît, a priori, que le catalyseur n'est plus apte à traiter les gaz d'échappement provenant du moteur à combustion interne.

On connait encore le document US2016222861A1 correspondant au préambule de la revendication 1.

Le but de l'invention est donc de pallier les inconvénients de l'art antérieur en proposant un procédé d'activation de diagnostic d'un catalyseur permettant de réduire, voire de supprimer, les diagnostics erronés concernant le catalyseur pour les moteurs à combustion interne du type Diesel équipés d'un filtre à particules et d'un système de réduction catalytique sélective.

Pour ce faire, l'invention se rapporte ainsi, dans son acceptation la plus large, à un procédé d'activation de diagnostic d'un catalyseur d'oxydation Diesel agencé dans une ligne d'échappement d'un moteur à combustion interne du type Diesel et apte à traiter les gaz d'échappement produits par ledit moteur à combustion interne, ledit catalyseur présentant une température amont et une température aval, ladite ligne d'échappement comportant en outre un dispositif de réduction catalytique sélective et un filtre à particules, ledit procédé comportant les étapes suivantes :
- une étape de mesure de la température aval dudit catalyseur ;
- une étape d'obtention d'une température aval selon un modèle thermique dudit catalyseur lorsqu'il est non imprégné ;
- une étape de détermination du mode de combustion dudit moteur à combustion interne parmi un mode régénération correspondant à la régénération dudit filtre à particules et un mode correspondant au fonctionnement dudit dispositif de réduction catalytique sélective ;
- une étape d'activation de diagnostic dudit catalyseur uniquement lorsque le mode de combustion est ledit mode régénération, le diagnostic étant basé sur la différence entre la température aval dudit catalyseur et la température aval selon ledit modèle thermique, ledit diagnostic signalant un défaut lorsque ladite différence est inférieure à une valeur de seuil de détection prédéterminée.

De préférence, ledit procédé comporte en outre avant l'étape d'activation l'étape suivante :
- une étape de mesure de la température amont dudit catalyseur, ledit diagnostic étant basé en outre sur la différence entre ladite température amont et ladite température aval, ledit diagnostic signalant un défaut lorsque ladite différence entre ladite température amont et ladite température aval est inférieure ou égale à une valeur de seuil de température prédéterminée dudit catalyseur.

Selon une caractéristique avantageuse, ladite valeur de seuil de détection prédéterminée est égale à environ 120 °C.

De préférence, ladite valeur de seuil de température prédéterminée dudit catalyseur est égale à environ 150 °C.

Dans un mode préféré, ledit mode de combustion correspondant à l'activation dudit dispositif de réduction catalytique sélective est activé lorsque ledit catalyseur présente une température aval d'au moins 200 °C.

Avantageusement, ladite température aval dudit catalyseur est comprise entre 250°C et 300 °C.

L'invention concerne également un dispositif de diagnostic d'un catalyseur d'oxydation Diesel agencé dans une ligne d'échappement d'un moteur à combustion interne du type Diesel et apte à traiter les gaz d'échappement produits par ledit moteur à combustion interne, ledit dispositif de diagnostic étant destiné à mettre en oeuvre les étapes du procédé selon l'invention et comprenant un capteur de mesure de la température aval dudit catalyseur, un moyen d'obtention d'une température aval selon un modèle thermique dudit catalyseur lorsqu'il est non imprégné, un organe de détermination du mode de combustion dudit moteur à combustion interne parmi un mode régénération correspondant à la régénération dudit filtre à particules et un mode correspondant au fonctionnement dudit dispositif de réduction catalytique sélective, un moyen d'activation de diagnostic dudit catalyseur uniquement lorsque le mode de combustion est en mode régénération, le diagnostic étant basé sur la différence entre la température aval dudit catalyseur et la température aval selon ledit modèle thermique, ledit diagnostic signalant un défaut lorsque ladite différence est inférieure à une valeur de seuil de détection prédéterminée.

L'invention porte en outre sur un système de traitement de données comprenant un processeur configuré pour mettre en oeuvre les étapes du procédé selon l'invention.

L'invention a pour objet également un produit de type programme d'ordinateur, comprenant au moins une séquence d'instructions stockée et lisible par un processeur et qui, une fois lue par ce processeur, provoque la réalisation des étapes du procédé selon l'invention.

L'invention concerne en outre un support lisible par un ordinateur comportant ledit produit de type programme d'ordinateur.

On décrira ci-après, à titre d'exemples non limitatifs, plusieurs formes d'exécution de la présente invention, en référence à la figure annexée sur laquelle :

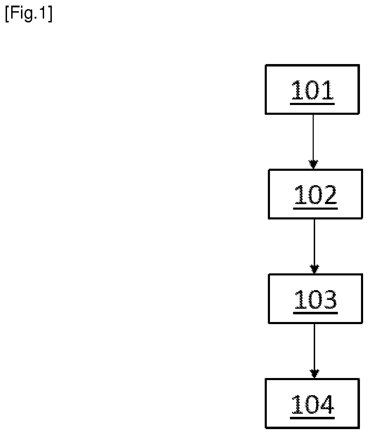

[Fig.1] illustre un schéma fonctionnel du procédé selon un mode de réalisation de l'invention ;

En référence à la figure 1, il est représenté un schéma fonctionnel du procédé selon l'invention. Depuis l'instauration de la norme Euro 5, un véhicule automobile neuf équipé d'un moteur à combustion interne du type Diesel doit comporter un filtre à particules. Un filtre à particules se remplit lors du roulage, au fur et à mesure des kilomètres parcourus par le véhicule automobile. Il doit être régulièrement régénéré afin d'éliminer par combustion les particules, ou suies, qu'il contient. Une régénération consiste à porter le filtre à particules à très haute température. Pour cela, il est procédé à des injections supplémentaires de carburant, aussi appelées post-injections, dans la ligne d'échappement du véhicule, ces injections supplémentaires étant totalement invisibles pour le conducteur. Ces injections supplémentaires entraînent une forte augmentation de la température des gaz d'échappement d'où une montée de température en amont du et dans le filtre. Avec cette montée de température, les suies, essentiellement composées de carbone, se transforment en gaz carbonique et en vapeur d'eau alors éliminés à travers la ligne d'échappement. Il s'ensuit qu'une régénération ne peut être déclenchée que si la température en amont du ou dans le filtre est suffisamment élevée. Pour une ligne d'échappement comprenant un catalyseur positionné en amont du filtre à particules, c'est lors des réactions de catalyse prenant place dans ce catalyseur qu'il se produit un dégagement de chaleur ou exotherme. Ce mode de combustion est appelé mode régénération. En outre, depuis l'apparition de la norme Euro 6, les rejets de polluants tels que les oxydes d'azote ont été revus à la baisse. Ainsi, il a été ajouté un système SCR sur la ligne d'échappement de certains véhicules automobiles comportant un moteur à combustion interne du type Diesel. Le système SCR nécessite de réaliser de multiples post-injections pour assurer son bon fonctionnement. Ce mode de combustion est dénommé FCLO, également appelé stratégie d'amorçage rapide du catalyseur. Le mode régénération produit une réaction exothermique au sein du catalyseur pendant un temps déterminé, de l'ordre de 10 à 20 secondes, afin de régénérer le filtre à particules. Par conséquent, la température aval TAV du catalyseur est supérieure à la température amont TAM du catalyseur lors de l'activation du mode régénération. Par exemple, la différence entre la température aval TAV et la température amont TAM est d'environ 150 °C. Afin de vérifier le bon fonctionnement du catalyseur, il est réalisé un diagnostic d'efficacité du catalyseur, également dénommé DOC, acronyme signifiant Diesel Oxydation Catalyst en anglais. Ce diagnostic est aussi appelé diagnostic de non imprégnation. Il s'agit de déterminer si les imprégnations du catalyseur, c'est-à-dire, en particulier, si les métaux précieux contenus dans le catalyseur, également dénommés « washcoat » en anglais, sont encore présents. En effet, lorsque le catalyseur n'est plus imprégné, son efficacité devient quasiment nulle. Le diagnostic est basé sur la comparaison de la température aval TAV du catalyseur mesurée avec la température aval TAVM selon un modèle thermique du catalyseur lorsqu'il est défaillant, ou, autrement dit, non imprégné. Une valeur de seuil de détection SEU1 correspondant à cette différence est prédéterminée. Dans un mode de réalisation particulier de l'invention, la valeur de seuil de détection SEU1 est d'environ 120°C. Dans un tel cas, la température aval TAV mesurée est proche de la température aval modélisée TAVM, c'est-à-dire qu'elle présente une différence inférieure ou égale à la valeur de seuil de détection SEU1. Il est ainsi diagnostiqué un catalyseur défaillant et une alerte est envoyée au superviseur du véhicule automobile. Le mode de combustion correspondant à l'activation du dispositif de réduction catalytique sélective SCR, ce mode étant également appelé FCLO, produit une réaction exothermique pour laquelle la température aval TAV mesurée est proche de la température aval modélisée TAVM. Par conséquent, lors du diagnostic du catalyseur, il est détecté une défaillance de ce dernier car la différence entre la température aval TAV mesurée et la température aval modélisée TAVM est inférieure ou égale à la valeur de seuil de détection SEU1. Il s'agit d'un diagnostic erroné car le faible écart entre la température aval TAV mesurée et la température aval modélisée TAVM est dû aux multiples post-injections ne permettant pas un dégagement de chaleur important lors des réactions exothermiques dans le catalyseur. Le procédé, selon l'invention, a pour objectif de résoudre ce problème et présente une étape de mesure 101 de la température aval TAV dudit catalyseur et une étape d'obtention 102 d'une température aval TAVM selon un modèle thermique dudit catalyseur lorsqu'il présente une défaillance. Ce modèle thermique est établi grâce à diverses expériences réalisées sur des catalyseurs non imprégnés. Il est ensuite déterminé, lors d'une étape 103, le mode de combustion du moteur à combustion interne parmi les deux modes de combustion mentionnés précédemment, à savoir un mode régénération correspondant à la régénération du filtre à particules et un mode FCLO correspondant à l'activation du dispositif de réduction catalytique sélective SCR. Le diagnostic du catalyseur est activé lors d'une étape 104 uniquement lorsque le mode de combustion est le mode régénération. De cette manière, le diagnostic n'est pas activé lorsque le mode de combustion est le mode FCLO correspondant à l'activation du dispositif de réduction catalytique sélective SCR permettant ainsi d'éviter les diagnostics erronés. Dans un mode de réalisation particulier, le procédé comporte en outre une étape de mesure 103a, réalisée avant l'étape d'activation 104, de la température amont TAM dudit catalyseur. Le diagnostic est également basé sur la différence entre ladite température amont TAM et ladite température aval TAV, le diagnostic signalant un défaut lorsque ladite différence entre ladite température amont TAM et ladite température aval TAV est inférieure ou égale à une valeur de seuil de température prédéterminée SEU2 du catalyseur. Dans un exemple de réalisation, la valeur de seuil de température prédéterminée SEU2 du catalyseur est égale à environ 150 °C. De manière préférée, le mode FCLO correspondant à l'activation dudit dispositif de réduction catalytique sélective SCR est activé lorsque ledit catalyseur présente une température aval TAV d'au moins 200 °C, voire comprise entre 250 °C et 300 °C permettant ainsi un fonctionnement optimal du dispositif de réduction catalytique sélective SCR. Le traitement des oxydes d'azote est par conséquent amélioré.

L'invention concerne également un dispositif de diagnostic du catalyseur apte à mettre en oeuvre le procédé selon l'invention. Le dispositif de diagnostic comprend un capteur de mesure de la température aval TAV du catalyseur, tel qu'un capteur de température disposé en aval du catalyseur. Il comporte en outre un moyen d'obtention d'une température aval TAVM selon un modèle thermique du catalyseur lorsqu'il est défaillant. Par exemple, il peut s'agir d'une interface ayant accès à la mémoire du superviseur du véhicule dans laquelle est stockée le modèle thermique. Le dispositif de diagnostic présente également un moyen de détermination du mode de combustion dudit moteur à combustion interne parmi un mode régénération correspondant à la régénération dudit filtre à particules et un mode FCLO correspondant au fonctionnement dudit dispositif de réduction catalytique sélective RCS. Par exemple, le superviseur envoie cette information au dispositif de diagnostic. Il comporte également un moyen d'activation de diagnostic du catalyseur uniquement lorsque le mode de combustion est en mode régénération, le diagnostic étant basé sur la différence entre la température aval TAV dudit catalyseur et la température aval TAVM selon ledit modèle thermique, le diagnostic signalant un défaut lorsque ladite différence est inférieure à une valeur de seuil de détection prédéterminée SEU1. Ce moyen d'activation peut, par exemple, être le superviseur du véhicule ou un calculateur dédié au dispositif de diagnostic.

Dans un mode de réalisation particulier, le procédé selon l'invention met en oeuvre un ordinateur, tel qu'un superviseur ou un calculateur. La présente invention peut être mise en oeuvre au moyen d'un système de traitement de données comprenant un processeur configuré pour mettre en oeuvre toutes les étapes du procédé. En outre, un produit de type programme d'ordinateur comprenant au moins une séquence d'instructions stockée et lisible par un processeur et qui, une fois lue par ce processeur, provoque la réalisation des étapes du procédé selon l'invention. Un support lisible par un ordinateur comporte ledit produit de type programme d'ordinateur.

## Revendications

1. Procédé d'activation de diagnostic d'un catalyseur d'oxydation Diesel agencé dans une ligne d'échappement d'un moteur à combustion interne du type Diesel et apte à traiter les gaz d'échappement produits par ledit moteur à combustion interne, ledit catalyseur présentant une température amont (TAM) et une température aval (TAV), ladite ligne d'échappement comportant en outre un dispositif de réduction catalytique sélective (SCR) et un filtre à particules (FAP), ledit procédé comportant les étapes suivantes :
- une étape de mesure (101) de la température aval (TAV) dudit catalyseur ;
- une étape d'obtention (102) d'une température aval (TAVM) selon un modèle thermique dudit catalyseur lorsqu'il est non imprégné ;
- une étape de détermination (103) du mode de combustion dudit moteur à combustion interne parmi un mode régénération correspondant à la régénération dudit filtre à particules et un mode (FCLO) correspondant à l'activation dudit dispositif de réduction catalytique sélective (SCR) ;
- une étape d'activation (104) de diagnostic dudit catalyseur uniquement lorsque le mode de combustion est ledit mode régénération, **caractérisé en ce que** le diagnostic est basé sur la différence entre la température aval (TAV) dudit catalyseur et la température aval (TAVM) selon ledit modèle thermique, ledit diagnostic signalant un défaut lorsque ladite différence est inférieure à une valeur de seuil de détection prédéterminée (SEU1).

2. Procédé d'activation de diagnostic selon la revendication 1 **caractérisé en ce que** ledit procédé comporte en outre avant l'étape d'activation (104), l'étape suivante :
- une étape de mesure (103a) de la température amont (TAM) dudit catalyseur, ledit diagnostic étant basé en outre sur la différence entre ladite température amont (TAM) et ladite température aval (TAV), ledit diagnostic signalant un défaut lorsque ladite différence entre ladite température amont (TAM) et ladite température aval (TAV) est inférieure ou égale à une valeur de seuil de température prédéterminée (SEU2) dudit catalyseur.

3. Procédé selon l'une des revendications 1 ou 2 **caractérisé en ce que** ladite valeur de seuil de détection prédéterminée (SEU1) est égale à environ 120 °C.

4. Procédé selon la revendication 2 **caractérisé en ce que** ladite valeur de seuil de température prédéterminée (SEU2) dudit catalyseur est égale à environ 150 °C.

5. Procédé selon l'une quelconque des revendications précédentes **caractérisé en ce que** ledit mode (FCLO) de combustion correspondant à l'activation dudit dispositif de réduction catalytique sélective (SCR) est activé lorsque ledit catalyseur présente une température aval (TAV) d'au moins 200 °C.

6. Procédé selon la revendication 5 **caractérisé en ce que** ladite température aval (TAV) dudit catalyseur est comprise entre 250°C et 300 °C.

7. Dispositif de diagnostic d'un catalyseur d'oxydation Diesel agencé dans une ligne d'échappement d'un moteur à combustion interne du type Diesel et apte à traiter les gaz d'échappement produits par ledit moteur à combustion interne **caractérisé en ce que** ledit dispositif de diagnostic est destiné à mettre en oeuvre les étapes du procédé selon l'une quelconque des revendications 1 à 6 et comprenant un capteur de mesure de la température aval (TAV) dudit catalyseur, un moyen d'obtention d'une température aval (TAVM) selon un modèle thermique dudit catalyseur lorsqu'il est non imprégné, un organe de détermination du mode de combustion dudit moteur à combustion interne parmi un mode régénération correspondant à la régénération dudit filtre à particules et un mode (FCLO) correspondant au fonctionnement dudit dispositif de réduction catalytique sélective (RCS), un moyen d'activation de diagnostic dudit catalyseur uniquement lorsque le mode de combustion est en mode régénération, le diagnostic étant basé sur la différence entre la température aval (TAV) dudit catalyseur et la température aval (TAVM) selon ledit modèle thermique, ledit diagnostic signalant un défaut lorsque ladite différence est inférieure à une valeur de seuil de détection prédéterminée (SEU1).

8. Système de traitement de données comprenant un processeur configuré pour mettre en oeuvre les étapes du procédé selon l'une quelconque des revendications 1 à 6.

9. Produit de type programme d'ordinateur, comprenant au moins une séquence d'instructions stockée et lisible par un processeur et qui, une fois lue par ce processeur, provoque la réalisation des étapes du procédé selon l'une quelconque des revendications 1 à 6.

10. Support lisible par un ordinateur comportant ledit produit de type programme d'ordinateur selon la revendication 9.

## Patentansprüche

1. Verfahren zur Aktivierung der Diagnose eines Dieseloxidationskatalysators, der in einer Abgasleitung eines Verbrennungsmotors vom Dieseltyp angeordnet ist und in der Lage ist, die von dem Verbrennungsmotor erzeugten Abgase zu behandeln, wobei der Katalysator eine stromaufwärtige Temperatur (TAM) und eine stromabwärtige Temperatur aufweist (TAV), wobei die Abgasleitung weiterhin eine Vorrichtung zur selektiven katalytischen Reduktion (SCR) und einen Partikelfilter (FAP) umfasst, wobei das Verfahren die folgenden Schritte umfasst:
- einen Schritt (101) zum Messen der stromabwärtigen Temperatur (TAV) des Katalysators;
- einen Schritt des Erhaltens (102) einer stromabwärtigen Temperatur (TAVM) gemäß einem thermischen Modell des Katalysators, wenn er nicht imprägniert ist;
- einen Schritt zum Bestimmen (103) des Verbrennungsmodus des Verbrennungsmotors aus einem Regenerationsmodus, der der Regeneration des Partikelfilters entspricht, und einem Modus (FCLO), der der Aktivierung der Vorrichtung zur selektiven katalytischen Reduktion (SCR) entspricht;
- einen Aktivierungsschritt (104) zur Diagnose des Katalysators nur dann, wenn der Verbrennungsmodus der Regenerationsmodus ist, wobei die Diagnose auf der Differenz zwischen der stromabwärtigen Temperatur (TAV) des Katalysators und der stromabwärtigen Temperatur (TAVM) gemäß dem thermischen Modell basiert, wobei die Diagnose einen Fehler anzeigt, wenn die Differenz kleiner als ein vorgegebener Erkennungsschwellenwert (SEU1) ist.

2. Diagnostisches Aktivierungsverfahren nach Anspruch 1, **dadurch gekennzeichnet, dass** das Verfahren vor dem Aktivierungsschritt (104) außerdem den folgenden Schritt umfasst:
- einen Schritt (103a) zum Messen der stromaufwärtigen Temperatur (TAM) des Katalysators, wobei die Diagnose weiterhin auf der Differenz zwischen der stromaufwärtigen Temperatur (TAM) und der stromabwärtigen Temperatur (TAV) basiert, wobei die Diagnose einen Fehler signalisiert, wenn die Differenz zwischen ihnen vorliegt die stromaufwärtige Temperatur (TAM) und die stromabwärtige Temperatur (TAV) kleiner oder gleich einem vorbestimmten Temperaturschwellenwert (SEU2) des Katalysators sind.

3. Verfahren nach einem der Ansprüche 1 oder 2, **dadurch gekennzeichnet, dass** der vorgegebene Erkennungsschwellenwert (SEU1) etwa 120 °C beträgt.

4. Verfahren nach Anspruch 2, **dadurch gekennzeichnet, dass** der vorgegebene Temperaturschwellenwert (SEU2) des Katalysators etwa 150 °C beträgt.

5. Verfahren nach einem der vorhergehenden Ansprüche, **dadurch gekennzeichnet, dass** der Verbrennungsmodus (FCLO), der der Aktivierung der Vorrichtung zur selektiven katalytischen Reduktion (SCR) entspricht, aktiviert wird, wenn der Katalysator eine stromabwärtige Temperatur (TAV) von mindestens 200 °C aufweist.

6. Verfahren nach Anspruch 5, **dadurch gekennzeichnet, dass** die stromabwärtige Temperatur (TAV) des Katalysators zwischen 250 °C und 300 °C liegt.

7. Vorrichtung zur Diagnose eines Dieseloxidationskatalysators, der in einer Abgasleitung eines Diesel-Verbrennungsmotors angeordnet ist und in der Lage ist, die von dem Verbrennungsmotor erzeugten Abgase zu behandeln, **dadurch gekennzeichnet, dass** die Diagnosevorrichtung dazu bestimmt ist, die Schritte des Verfahrens gemäß auszuführen einem der Ansprüche 1 bis 6 und umfassend einen Sensor zum Messen der stromabwärtigen Temperatur (TAV) des Katalysators, ein Mittel zum Erhalten einer stromabwärtigen Temperatur (TAVM) gemäß einem thermischen Modell des Katalysators, wenn dieser nicht imprägniert ist, ein Element für Bestimmen des Verbrennungsmodus des Verbrennungsmotors aus einem Regenerationsmodus, der der Regeneration des Partikelfilters entspricht, und einem Modus (FCLO), der dem Betrieb der selektiven katalytischen Reduktion (SCR) der Vorrichtung entspricht, ein Mittel zum Aktivieren der Diagnose nur des Katalysators wenn sich der Verbrennungsmodus im Regenerationsmodus befindet, wobei die Diagnose auf der Differenz zwischen der stromabwärtigen Temperatur (TAV) des Katalysators und der stromabwärtigen Temperatur (TAVM) gemäß dem thermischen Modell basiert, wobei die Diagnose einen Fehler anzeigt, wenn die Differenz kleiner ist als einen vorgegebenen Erkennungsschwellenwert (SEU1).

8. Datenverarbeitungssystem, das einen Prozessor umfasst, der zum Implementieren der Schritte des Verfahrens nach einem der Ansprüche 1 bis 6 konfiguriert ist.

9. Produkt vom Typ Computerprogramm, das mindestens eine Folge von Anweisungen umfasst, die von einem Prozessor gespeichert und gelesen werden können und die, sobald sie von diesem Prozessor gelesen wurden, die Ausführung der Schritte des Verfahrens nach einem der Ansprüche 1 bis 6 bewirkt.

10. Computerlesbares Medium, das das computerprogrammartige Produkt nach Anspruch 9 umfasst.

## Claims

1. Method for activating the diagnosis of a Diesel oxidation catalyst arranged in an exhaust line of a Diesel type internal combustion engine and capable of treating the exhaust gases produced by said internal combustion engine, said catalyst having an upstream temperature (TAM) and a downstream temperature (TAV), said exhaust line further comprising a selective catalytic reduction device (SCR) and a particle filter (FAP), said method comprising the following steps:
- a step (101) of measuring the downstream temperature (TAV) of said catalyst;
- a step of obtaining (102) a downstream temperature (TAVM) according to a thermal model of said catalyst when it is not impregnated;
- a step of determining (103) the combustion mode of said internal combustion engine among a regeneration mode corresponding to the regeneration of said particle filter and a mode (FCLO) corresponding to the activation of said selective catalytic reduction (SCR) device;
- an activation step (104) for diagnosing said catalyst only when the combustion mode is said regeneration mode, the diagnosis being based on the difference between the downstream temperature (TAV) of said catalyst and the downstream temperature (TAVM) according to said model thermal, said diagnosis signaling a fault when said difference is less than a predetermined detection threshold value (SEU1).

2. Diagnostic activation method according to claim 1 **characterized in that** said method further comprises, before the activation step (104), the following step:
- a step (103a) of measuring the upstream temperature (TAM) of said catalyst, said diagnosis being further based on the difference between said upstream temperature (TAM) and said downstream temperature (TAV), said diagnosis signaling a fault when said difference between said upstream temperature (TAM) and said downstream temperature (TAV) is less than or equal to a predetermined temperature threshold value (SEU2) of said catalyst.

3. Method according to one of claims 1 or 2 **characterized in that** said predetermined detection threshold value (SEU1) is equal to approximately 120 °C.

4. Process according to claim 2 **characterized in that** said predetermined temperature threshold value (SEU2) of said catalyst is equal to approximately 150°C.

5. Method according to any one of the preceding claims **characterized in that** said combustion mode (FCLO) corresponding to the activation of said selective catalytic reduction device (SCR) is activated when said catalyst has a downstream temperature (TAV) of at least 200°C.

6. Process according to claim 5 **characterized in that** said downstream temperature (TAV) of said catalyst is between 250°C and 300°C.

7. Device for diagnosing a Diesel oxidation catalyst arranged in an exhaust line of a Diesel type internal combustion engine and capable of treating the exhaust gases produced by said internal combustion engine, **characterized in that** said device diagnostic is intended to implement the steps of the method according to any one of claims 1 to 6 and comprising a sensor for measuring the downstream temperature (TAV) of said catalyst, a means for obtaining a downstream temperature (TAVM ) according to a thermal model of said catalyst when it is not impregnated, a member for determining the combustion mode of said internal combustion engine among a regeneration mode corresponding to the regeneration of said particle filter and a mode (FCLO) corresponding to the operation of said device selective catalytic reduction (SCR), a means of activating diagnosis of said catalyst only when the combustion mode is in regeneration mode, the diagnosis being based on the difference between the downstream temperature (TAV) of said catalyst and the downstream temperature (TAVM ) according to said thermal model, said diagnosis signaling a fault when said difference is less than a predetermined detection threshold value (SEU1).

8. Data processing system comprising a processor configured to implement the steps of the method according to any one of claims 1 to 6.

9. Computer program type product, comprising at least one sequence of instructions stored and readable by a processor and which, once read by this processor, causes the steps of the method according to any one of claims 1 to 6 to be carried out.

10. A computer-readable medium comprising said computer program type product according to claim 9.
